# EUROPEAN PATENT SPECIFICATION

(11) **EP 0 422 105 B1**
(45) Date of publication and mention of the grant of the patent: **07.09.1994**
(21) Application number: 89907989.1
(22) Date of filing: 09.06.1989
(51) Int. Cl.: C01B 13/14, C01B 13/18

(54) **METAL OXIDE CERAMIC POWDERS AND METHODS OF MAKING SAME**
METALLOXID-KERAMISCHE PULVER UND VERFAHREN ZUR HERSTELLUNG
POUDRES DE CERAMIQUE D'OXYDE METALLIQUE ET LEURS METHODES DE PRODUCTION

(30) Priority: 09.06.1988 US 204643; 30.08.1988 US 238643; 07.06.1989 US 362613
(43) Date of publication of application: 17.04.1991
(73) Proprietor: BATTELLE MEMORIAL INSTITUTE, Richland, WA 99352 (US)
(72) Inventor: PEDERSON, Larry, R., Kennewick, WA 99337 (US); CHICK, Lawrence, A., Richland, WA 99352 (US); EXHAROS, Gregory, J., Richland, WA 99352 (US)
(74) Representative: Spence, Anne
(86) International application number: US8902528
(87) International publication number: WO8912027

(56) References cited:
- GB-A- 1 282 307
- JP-A- 6 259 531
- US-A- 2 763 569
- US-A- 3 872 027
- US-A- 3 893 821
- US-A- 4 029 738
- US-A- 4 038 336
- US-A- 4 077 808
- US-A- 4 293 534
- US-A- 4 295 868
- US-A- 4 473 452
- US-A- 4 589 969
- US-A- 4 742 030
- US-A- 4 772 511
- US-A- 4 772 576
- US-A- 4 804 649
- US-A-45 088 41
- WORLD PATENTS INDEX LATEST Week 8910, Derwent PublicationsLtd., London, GB; AN 89-072180 & JP-A-01 024 016 (NIPPON TELEGR. & TELEPH.) 26 January 1989
- WORLD PATENTS INDEX LATEST Week 8910, Derwent PublicationsLtd., London, GB; AN 89-072181 & JP-A-01 024 017 (NIPPON TELEGR. & TELEPH.) 26 January 1989
- Japanese Journal of Applied Physics, vol. 26, No. 10, October 1987, Maki Kawi et al., "Formation of Y-Ba-Cu-O Superconducting film By Spray Pyrolysis Method" pages L1740-L1742
- Mat. Res. Soc. Symp. Proc, vol. 99, 30 November 1987, Maki Kawai et al.,"Properties of Y-Ba-Cu-O Films Formed By Spray Pyrolysis Method" pages 331-334

## Description

This invention relates to metal oxide powders useful in the production of various ceramic materials, and to processes for making such metal oxide ceramic powders, particularly metal oxide ceramic powders of fine particle size.

Fine particle size (0.1-1.0 micron diameter), metal oxide powders are highly desirable in ceramic product manufacturing. Sintering of these fine powders occurs at temperatures much lower than most larger-sized commercial powders.

The traditional methods for producing ceramic powders involve mechanically mixing the component oxides in their appropriate stoichiometric amounts, calcining the solution at high temperature to obtain a single phase, and mechanically milling the product to obtain the desired particle size. However, high temperature calcination promotes crystal growth, which is an undesirable effect, the desired end product being a fine-grained ceramic powder. On the other hand, mechanical milling often introduces unwanted impurities into the final ceramic powder product.

A number of somewhat complicated chemical methods have been developed to produce fine ceramic powders. Included are controlled hydrolysis and condensation of metal alkoxides (sol gel), flame oxidation, and spray drying of a colloidal suspension, freeze-drying, and coprecipitation.

In U.S. Patent 3,330,697, a method of producing electrical capacitors is described employing lead and alkaline earth titanates, zirconates and niobates. These compounds are used in selected combinations and proportions to form resin intermediates. Calcination of the resin intermediates removes the organic material and leaves a metal oxide powder, ideally in a finely divided state. A list of compounds which can be used in this process are provided in column 2, lines 62-67.

In a subsequent article in Mat. Res. Soc. Symp. Proc., Vol. 32, pages 239-244 (1984), entitled, Preparation Of Strontium Titanate Ceramics In Internal Boundary Layer Capacitors By The Pechini Method, by Budd, et al., strontium titanate is described as one of the titanate perovskite materials that are widely used in the electronic ceramics industry. In the study described in the article, a liquid resin-forming technique, as described in the above U.S. 3,330,697 patent was used to prepare the strontium titanate powders.

In an article entitled, Preparation of Fine Organic Powders by Evaporative Decomposition Solutions, by D.M. Roy, et al., in Am. Ceram. Soc. Bull., Vol 56, at page 1023 (1977), the authors describe ceramic powder production by evaporative decomposition of solutions. Specifically, aluminum oxide and calcium aluminum oxide powders were prepared in laboratory scale furnaces using the EDS technique. Details of the furnace and atomizer assembly, respectively, employed in the EDS method are set forth in FIGS. 1 and 2 of the Roy article.

A wide variety of thin ceramic films have also been prepared by various vacuum techniques and by chemical methods. These methods are described in the following references:
1. H. Schroeder, Phys. Thin Films, 5, 87 (1969).
2. B.E. Yoldas and T.W. O'Keefe, Appl. Opt., 18, 3133 (1979).
3. C. Feldman, J. appl. Phys. 27, 870 (1956)
4. M.G. Pechini, United States Patent 3,330,697 (1967).

A relatively large volume of other articles have been written concerning various chemical routes to production of thin ceramic films. Two books, Better Ceramics Through Chemistry, eds. C.J. Brinker, D.E. Clark, and D.R. Ulrich, Materials Research Society Proceedings, Volume 32, North-Holland, New York, 1984, and Better Ceramics Through Chemistry II, eds. C.J. Brinker, D.E. Clark, and D.R. Ulrich, Materials Research Society Symposia Proceedings, Volume 73, Materials Research Society, Pittsburgh, PA 1986, contain a number of pertinent articles. Vacuum techniques generally suffer from the requirement of relatively sophisticated apparatus and/or area and geometrical constraints. Advantages of chemical solution methods include simplicity, low cost, and precise control of film stoichiometry.

Accordingly, a need exists for a process for producing ceramic powders, particularly fine, single-phase ceramic powder, without the use of complex equipment such as the above-described EDS furnace, which can be produced in a direct manner with a minimum amount of skill and labor, and which provides a high-quality product. A need also exists for a very simple method to prepare thin ceramic films, particularly thin ceramic films from an aqueous solution of metal nitrates and an amino acid.

### SUMMARY OF THE INVENTION

This invention is directed to metal oxide powders, and to methods for making same, and overcomes some of the above problems associated with the prior art processes for producing ceramic powders. The process of this invention is direct and relatively simple, requiring a minimum level of skill and labor to complete, is relatively low cost, and produces a fine metal oxide powder which is high in quality and which is typically formed as a single-phase ceramic powder.

The process generally includes the formation of homogeneous, aqueous precursor mixtures of at least one substantially soluble metal salt and a substantially soluble, combustible co-reactant compound, typically an amino acid. This produces, upon evaporation, a substantially homogeneous intermediate material having a concentration which would support combustion. The homogeneous intermediate material essentially comprises highly dispersed or solvated metal constituents and the co-reactant compound. The intermediate material is quite flammable. A metal oxide powder results on ignition of the intermediate product, which combusts same to produce the product powder. The combustion step is typically conducted at a temperature which will consume substantially all of the amino acid compound, but which will neither substantially melt the metal oxide powder nor cause the loss of volatile components thereof. Combustion should therefore be conducted to avoid a substantial loss of stoichiometry or the formation of incorrect crystalline phases in the metallic oxide powder product. Calcination of the product can then be conducted to remove any residual organic phase so that submicron ceramic particles of the above-described metal oxide powder are obtained.

The foregoing and other objects, features and advantages of the invention will become more readily apparent from the following detailed description of a preferred embodiment which proceeds with reference to the drawings.

This invention comprises the production of metal oxide ceramic powders from an initial precursor aqueous solution of a corresponding metal salt and an amino acid. The particular metal elements of the metal salts that can be used in the process of this invention are those which will form a substantially water soluble salt and can be converted to a metal oxide during burning of the metal salt/amino acid/water solution. This is contrary to the U.S. 3,330,697 patent which states that compounds such as nitrates did not serve the objectives of that invention. Metal cations that are useful in producing the metal oxide powders of this invention are aluminum, calcium, chromium, manganese, iron, nickel, copper, strontium, yttrium, zirconium, silver, thallium, barium, lanthanum and bismuth, as well as lithium, sodium, magnesium, potassium, scandium, zinc, rubidium, cadmium, indium, cesium, mercury, lead, cerium, praseodymium, neodymium, samarium, europium, gadolinium, terbium, dysprosium, holmium, erbium, thulium, ytterbium, lutetium, uranium, thorium, cobalt, zinc, hafnium and molybdenum respectively.

The anions which are particularly useful in this invention are those which exhibit substantial solubility in aqueous mixture, and which decompose with little or no residue during ignition of the metal salt/amino acid aqueous precursor mixture. Anions suitable for use in this process include acetates, formates, halides (particularly chlorides, bromides, iodides), oxyhalides (particularly perchlorates, perbromates, periodates, chlorates, bromates, iodates, chlorites, bromites, and iodites), sulphates, carbonates and nitrates, respectively. However, the anion of choice is the nitrate ion. Nitrate compounds are quite soluble in water, are widely available, and are stable in a water mixture. Nitrates also provide oxygen to combust the amino acids. Very little residue (less than 1%) remains in the ash after ignition of a metal nitrate/amino acid mixture. Furthermore, any residue from the use of nitrates can be essentially eliminated by calcining the ash at a temperature of about 600-700°C.

Metal salt reactants capable of producing the powders of the present invention include the following compounds: Lanthanum nitrate hydrate, such as La(NO₃)₃.6H₂O; strontium nitrate, anhydrous; chromium nitrate hydrate, such as Cr(NO₃)₃.9H₂O; yttrium nitrate hydrate, such as Y(NO₃)₃.6H₂O; calcium nitrate hydrate, such as Ca(NO₃)₂.4H₂O; barium nitrate; copper nitrate hydrate, such as Cu(NO₃)₂.3H₂O; bismuth nitrate hydrate, such as Bi(NO₃)₃.5H₂O; nickel nitrate hydrate, such as Ni(NO₃)₂.6H₂O; iron nitrate hydrate, such as Fe(NO₃)₂.6H₂O; zirconium nitrate pentahydrate, manganese (II) nitrate tetrahydrate, aluminum nitrate hydrate, such as Al(NO₃)₃·9H₂O, cerium nitrate hydrate such as Ce(NO₃)₄·6H₂O or combinations of these metal salt reactants.

The co-reactant, particularly an amino acid, is combined with a metal salt in aqueous mixture to produce the subject precursor material. It is important that the co-reactant compound employed have a relatively high water solubility, good complexing properties, and, after evaporation, will combust with as little residue as possible. The amino acid of choice is glycine because it the simplest amino acid, is readily available, inexpensive, and requires the least amount of oxidant to combust. Other amino acids such as glycine, alanine, valine, leucine, isoleucine, proline, aspartic acid, glutamic acid, lysine, arginine, histidine, asparagine, glutamine, serine, threonine, phenylalanine, tyrosine, and tryptophan can be suitable in this invention.

In the precursor mixture, the ratio of amino acid to metal cation is from about a mole ratio of 0.5:1 up to a ratio of about 6:1. The best product usually results when the glycine-to-cation molar ratio is adjusted to produce the largest bulk volume of ash. Sufficient water is added to dissolve the metal salts and the amino acid.

Ammonium nitrate and additional amino acid may be added to the aqueous solution of metal nitrates and amino acid to increase the bulk volume of the ash produced.

The precursor mixture may be formed in some instances under acidic or basic conditions. However, it is preferred that the pH of the mixture be approximately neutral.

The precursor mixture is formed into an intermediate material, preferably in the form of a glass-like intermediate material, by evaporating water therefrom. The amine and carboxylic acid end groups of the amino acid bind with the metal cations in mixture, thereby increasing the solubility of the metal salt and inhibiting inhomogeneous precipitation thereof. Thus, as the precursor aqueous mixture is concentrated by evaporation of excess water, a material results, in which diffusion and therefore precipitation of individual components, is inhibited.

The intermediate material has a relatively low ignition temperature, and can be easily heated to the point of autoignition. For example, the autoignition temperature of an intermediate formed from lanthanum nitrate hydrate, strontium nitrate, and chromium nitrate hydrate is about 200°C.

When the precursor solution is ignited, the nitrate or other anion usually serves as the principal oxidizer for the combustion of the amino acid. Oxygen from the air may also participate in combustion of some of the amino acid, depending on the ratio of amino acid to nitrate in the precursor solution and the identity of the amino acid. However, the combustion temperature and the general vigor of the combustion reaction decreases as the required amount of air increases. For example, in the case of (La,Sr)CrO₃ prepared from the metal nitrates and glycine, the most vigorous combustion and highest combustion temperatures occurred when two glycine molecules were present in the precursor solution for every three nitrate ions, which corresponds to about two glycine molecules per metal cation. When the quantity of glycine was increased to one glycine molecule per nitrate ion, or three glycine molecules per metal cation, the combustion reaction was much slower and occurred at a much lower temperature.

Thus, combustion generally occurs at a temperature that will consume substantially all of the amino acid, but will neither substantially melt the metal oxide powder (which causes excessive sintering of the particles), nor volatilize any of the metal oxide components causing substantial loss of stoichiometry of the final powder product. Control over the combustion temperature therefore can be very important. Excessive sintering of the ceramic powder particles will result if the combustion temperature is at too high a level so that the particles melt; loss of some of the more volatile components can also occur at the highest combustion temperatures. For example, for the high critical temperature superconductor yttrium barium cuprate, use of three glycine molecules for every four nitrate ions, equivalent to two glycine molecules per metal cation, gave a combustion temperature that was too high to form a useful powder. The ceramic particles sintered to form large, porous chunks; the product also was not superconducting after the usual thermal processing, indicating some loss of stoichiometry or formation of incorrect crystalline phases. However, when nine glycine molecules were present for every eight nitrate ions, equivalent to three glycine molecules per metal cation, particles formed were submicron in diameter; with subsequent thermal processing, the product exhibited superconducting properties. Refractory ceramic materials such as (La,Sr)CrO₃, because of their much higher melting temperatures, are much less sensitive to the combustion temperature. Acceptable products can be formed over a much wider range of amino acid to metal or nitrate ratios in the precursor solution.

Although very little residue remains in the ash after ignition of the metal salt/amino acid intermediate material, any remaining nitrate or carbon can be driven off and essentially eliminated by volatizing same by calcination or other like techniques. Typically, calcination can be accomplished at temperatures of 700°C, or less, using readily available equipment, such as a common laboratory muffle furnace or the like. The metal oxide particles will generally grow in size during the calcination process.

Metal oxide powder products which can be produced by this invention include the following: lanthanum strontium chromite, yttrium calcium chromite, lanthanum strontium manganite, yttrium calcium manganite, yttrium barium copper oxide, bismuth calcium strontium copper oxide, nickel oxide-nickel ferrite, yttria-stabilized zirconia, calcium zirconate, strontium zirconate, manganese ferrite, lanthanum strontium ferrite, zirconium aluminate, cerium zirconium oxide and lanthanum strontium aluminum chromite. The structure formulae of specific metal oxide materials which can be produced by this invention are as follows: La₁₋ₓSrₓCrO₃, where x = 0 to 1.0; Y₁₋ₓCaₓCrO₃, where x = 0 to 1.0; YBa₂Cu₃O₇₋ₓ, where x = 0.06; Bi₂CaSr₂Cu₂O₉; NiO-NiFe₂O₄; 0-20% mole percent Y₂O₃,ZrO₂; CaZrO₃; SrZrO₃; MnFe₂O₄; La_{0.75}Sr_{0.25}FeO₃; (Zr0₂)ₓ(Al₂0₃)₁₋ₓ, where x = 0.0 to 1.0; La₁₋ₓSrₓMn0₃, where x = 0.0 to 1.0; Y₁₋ₓCaₓMn0₃, where x = 0.0 to 1.0; Ce0₂·Zr0₂, and La_{1-y}Sr_{y}Cr₁₋ₓAlₓ0₃, where y = 0 to 0.3 or x = 0 to 0.3.

The fine, metal oxide particles of this invention are useful in numerous ceramic applications. Primary metal oxide particles are typically in a narrow particle size distribution range, and are generally not more than about 1 micrometer (1000 nm) in diameter. More specifically, the fine particles produced by the process of the present invention are of a submicron particle size, the primary particle diameter being preferably in the range of about 10 to 700 nm, and more preferably about 20 to 500 nm, and most preferably about 20 to 300 nm.

The subject metal oxide powders can comprise a single crystalline phase, if such is desired, as determined by X-ray diffraction (XRD) analysis. For example, X-ray diffraction analyses were performed for the calcined (750°C for 4 hrs) and uncalcined ash of the composition La_{0.84}Sr_{0.16}CrO₃. The uncalcined ash of that composition gave only diffraction lines expected for materials which have a perovskite structure, but were broadened due to the very small particle size of the product. More importantly, no diffraction lines were visible corresponding to individual reactant component oxides or phases other than La(Sr)Cr0₃ which indicated that the metal oxide powders were single-phased.

The submicron particles of the invention herein have a relatively high surface area, particularly in view of their submicron size. For example, particles of the composition La_{0.84}Sr_{0.16}CrO₃ exhibit a BET surface area of about 25 square-meters per gram.

### EXAMPLE 1

Lanthanum strontium chromite fine ceramic powders were produced according to the present invention. This material can be used as bipolar or current interconnecting material in the previously described solid oxide fuel cells. Lanthanum strontium chromite is very difficult to produce by conventional methods.

The following describes a preferred preparation method of La₁₋ₓSrₓCrO₃:
0.0084 moles of lanthanum nitrate hydrate [La(NO₃)₃.6H₂O], 0.0016 moles of strontium nitrate, anhydrous [Sr(NO₃)₂], 0.01 moles of chromium nitrate hydrate [Cr(NO₃)₃.9H₂O], 0.06 moles of glycine [HOOC-CH₂-NH₂], appropriate to prepare 0.01 moles of La_{0.84}Sr_{0.16}Cr0₃, were dissolved in a minimum quantity of deionized water. The three metal nitrates and glycine formed a homogeneous, aqueous precursor mixture. The precursor mixture was heated on a hot plate (or in an oven) to evaporate a substantial portion of the water, until the concentration of the solution was approximately 1 mole/liter in terms of the product oxide phase.

Approximately 15 ml (at a time) of the concentrated solution was placed in a 1,000 ml glass beaker. This small aliquot was heated on a hot plate until it boiled, evaporating the remaining free water. The viscous, evaporated precursor solution was then further heated until the autoignition temperature was reached.

The mixture temperature was raised to approximately 200°C and autoignition of the evaporated precursor mixture occurred. The residual ash left in the beaker after autoignition consisted of low density ash containing very fine primary particles of (La,Sr)Cr0₃. The residual ash was calcined at approximately 650°C for 4 hours to drive off volatile residuals, which constituted less than one weight percent of the ash.

Fine primary ceramic particles were formed having diameters ranging between approximately 20 and 100 nanometers, and consisting of one crystalline phase. These submicron powders had a surface area greater than 20 square meters per gram. These particles were sinterable in air at 1550°C to a density of greater than 95 percent of their theoretical density.

X-ray diffraction analyses were performed for the uncalcined ash and for ash calcined at 650°C for 4 hours. The uncalcined ash gave only diffraction lines expected for the perovskite structure, but were somewhat broadened due to the very small particle size of the powder. Most importantly, no diffraction lines were visible corresponding to the individual component oxides (Cr₂O₃, SrO, or La₂O₃) of the ceramic oxide product or phases other than (La,Sr)Cr0₃. Following calcination, diffraction lines sharpened, due to growth of ceramic particles within the ash. 0.01 moles (approximately 2.3 grams) of La_{0.84}Sr_{0.16}CrO₃ powder were produced by the process of this invention.

### EXAMPLE 2

The procedure outlined in Example 1 was repeated with the exception of the use of different starting materials, as follows:
yttrium nitrate hydrate [Y(NO₃)₃.6H₂O]
calcium nitrate hydrate [Ca(NO₃)₂.4H₂O]
chromium nitrate hydrate [Cr(NO₃)₃.9H₂O]
Yttrium calcium chromite compounds are closely related to the (La,Sr)CrO₃ compounds in Example 1. Both families of compounds are known to be stable at high temperature and to exhibit good electrical properties. Submicron, single-phase (Y,Ca)CrO₃ powders were prepared of the structural formula Y₍₁₋ₓ₎CaₓCrO₃.

### EXAMPLE 3

0.01 moles (approximately 6.6 grams) of the high temperature oxide ceramic material YBa₂Cu₃O₇₋ₓ, where superconducting properties are optimized for x=0.06, was prepared. High temperature superconductors are likely to find wide application in energy conservation technology, sensors, magnets, and magnetic shielding. The procedure of Example 1 was repeated using the following starting materials in their appropriate stoichiometric quantities:
0.01 moles of yttrium nitrate hydrate [Y(NO₃)₃.6H₂O]
0.02 moles of barium nitrate
0.03 moles of copper nitrate hydrate [Cu(NO₃)₂.3H₂O]
The product YBa₂Cu₃O₇₋ₓ ceramic powder was pressed into a pellet and sintered to the orthorhombic phase at approximately 950°C. The pellets were furnace cooled to 450°C and annealed in flowing oxygen at that temperature. The critical temperature for pellets made using this method is greater than 88°K.

### EXAMPLE 4

Preparation of a Bi₂CaSr₂Cu₂09 powder followed the procedure outlined in Example 1, except for the use of the following starting materials.
calcium nitrate hydrate [Ca(NO₃)₂.4H₂O]
bismuth nitrate hydrate [Bi(NO₃)₃.5H₂O]
copper nitrate hydrate [Cu(NO₃)₂.3H₂O]
strontium nitrate [Sr(NO₃)₂]
This composition has also been shown to exhibit superconducting properties above the temperature of liquid nitrogen.

### EXAMPLE 5

Nickel oxide-nickel ferrite powders were prepared using the procedure of Example 1, except for the following starting materials:
nickel nitrate hydrate [Ni(NO₃)₂.6H₂O]
iron nitrate hydrate [Fe(NO₃)₂.6H₂O]
The mixed phase ceramic nickel oxide-nickel ferrite [NiO-NiFe₂O₄) may be used as an inert anode in the refining of aluminum metal. The material is known to have good electronic conductivity and has good corrosion resistance in the extreme environments of aluminum refining.

### EXAMPLE 6

Zirconia and yttria-stabilized zirconia (0-20 mole percent Y₂O₃) were prepared using the procedure of Example 1, except that the starting materials are zirconium nitrate pentahydrate, yttrium nitrate hexahydrate, and glycine.

The ceramic product material is known to be stable at elevated temperatures, and has found use in sensor technology, wear-resistant materials, and corrosionresistant materials, among numerous other uses.

### EXAMPLE 7

Using the same procedure as described in Example 1, calcium nitrate tetrahydrate and zirconium nitrate pentahydrate were combined to produce a calcium zirconate ceramic powder. Calcium zirconate is a refractory material having good electrical properties.

### EXAMPLE 8

Using the same procedure as described in Example 1, strontium nitrate and zirconium nitrate pentahydrate were combined to produce strontium zirconate. Strontium zirconate is a refractory material with good electrical properties.

### EXAMPLE 9

Using the same procedure as described in Example 1, manganese (II) nitrate tetrahydrate and iron (II) nitrate hexahydrate were combined to produce manganese ferrite. Manganese ferrite is a refractory ceramic with good magnetic and electronic properties.

### EXAMPLE 10

Using the same procedure as described in Example 1, lanthanum nitrate hexahydrate, strontium nitrate, and iron (II) nitrate hexahydrate were combined to produce lanthanum strontium ferrite. Lanthanum strontium ferrite is a refractory ceramic with good magnetic and electronic properties.

### EXAMPLE 11

Using the same procedure described in Example 1, lanthanum nitrate hexahydrate, strontium nitrate, and manganese (II) nitrate tetrahydrate were combined to produce lanthanum strontium manganite, of the formula La₁₋ₓSrₓMn0₃, where x = 0.0 to 1.0. Lanthanum strontium anganite is a refractory ceramic with good magnetic and electrical properties.

### EXAMPLE 12

Using the same procedure described in Example 1, yttrium nitrate hexahydrate, calcium nitrate tetrahydrate, and manganese (II) nitrate tetrahydrate were combined to produce yttrium calcium manganite, of the formula Y₁₋ₓCaₓMn0₃, where X = 0.0 to 1.0. Yttrium calcium manganite is a refractory ceramic with good magnetic and electrical properties.

### EXAMPLE 13

Using the same procedure described in Example 1, zirconium nitrate pentahydrate and aluminum nitrate nonahydrate were combined to produce an aluminum oxide-zirconium oxide composite. This material has applications as a structural ceramic.

### EXAMPLE 14

Using the same procedure described in Example 1, cerium nitrate hexahydrate and zirconium nitrate pentahydrate were combined to produce ceria-zirconia Ce0₂·Zr0₂). This refractory ceramic has good electrical properties.

### EXAMPLE 15

Using the same procedure as described in Example 1, lanthanum nitrate hydrate, strontium nitrate, aluminum nitrate hydrate, and chromium nitrate hydrate were combined to produce lanthanum strontium aluminum chromite La_{1-y}Sr_{y}Cr₁₋ₓAlₓ0₃, where y = 0.0 to 0.3 and x = 0.0 to 0.3. This refractory ceramic exhibits good electrical conductivity.

## Claims

1. A process for producing a metal oxide powder, which comprises
forming a substantially homogeneous, aqueous precursor mixture comprising at least one substantially soluble metal salt and a substantially soluble, combustible amino acid compound;
evaporating said precursor mixture to form a substantially homogeneous intermediate material having a composition and concentration which will support combustion; and
igniting said intermediate material and combusting same through auto ignition to produce said metal oxide powder.

2. The process of claim 1, wherein said amino acid compound comprises glycine.

3. The process of claim 1, wherein the anion of said metal salt comprises a nitrate compound.

4. The process of claim 1, wherein said combustion step is conducted at a temperature which will consume substantially all of said amino acid compound, but will neither substantially melt said metal oxide powder nor cause the loss of said volatile metal oxide components causing a substantial loss of stoichiometry or the formation of incorrect crystalline phases.

5. The process of claim 1, wherein the cation of said metal salt comprises any one of aluminum, calcium, chromium, manganese, iron, nickel, copper, strontium, yttrium, zirconium, silver, barium, lanthanum, bismuth, lithium, sodium, magnesium, potassium, scandium, zinc, rubidium, cadmium, indium, cesium, mercury, thallium, lead, cerium, praseodymium, neodymium, samarium, europium, gadolinium, terbium, dysprosium, holmium, cobalt, hafnium, molybdenum, erbium, thulium, ytterbium, lutetium, uranium and thorium, respectively.

6. The process of claim 1, wherein said metal oxide powder comprises any one of lanthanum strontium chromite, yttrium calcium chromite, lanthanum strontium manganite, yttrium calcium manganite, ceria-zirconia, alumina-zirconia, lanthanum strontium aluminum chromite, yttrium barium copper oxide, bismuth calcium strontium copper oxide, nickel oxide-nickel ferrite, yttria-stabilized zirconia, calcium zirconate, strontium zirconate, manganese ferrite, and lanthanum strontium ferrite.

7. The process of claim 1, wherein said metal salt comprises any one of lanthanum nitrate hydrate, strontium nitrate, chromium nitrate hydrate, yttrium nitrate hydrate, calcium nitrate hydrate, barium nitrate, copper nitrate hydrate, bismuth nitrate hydrate, nickel nitrate hydrate, iron nitrate hydrate, zirconium nitrate pentahydrate, yttrium nitrate hexahydrate, manganese nitrate tetrahydrate, iron nitrate hexahydrate, and lanthanum nitrate hexahydrate, aluminum nitrate nonahydrate, cerium nitrate hexahydrate, cobalt nitrate hydrate, zinc nitrate hydrate, hafnium nitrate hydrate, and molybdenum nitrate hydrate.

8. The process of claim 1, wherein the anion of said metal salt comprises any one of an acetate, formate, halide, oxyhalide, sulphate, carbonate and nitrate compound.

9. The process of claim 1, wherein the primary particle diameter of the metal oxide powder is in the range of about 10 to 700 nm.

10. The process of claim 1, wherein said amino acid compound comprises any one of glycine, alanine, valine, leucine, isoleucine, proline, aspartic acid, glutamic acid, lysine, arginine, histidine, asparagine, glutamine, serine, threonine, phenylalanine, tyrosine, and tryptophan.

11. The process of claim 1, wherein the primary particle diameter of the metal oxide powder is in the range of about 100 to 300 nm.

12. A process for producing a substantially homogenous intermediate material of claim 1, said material having a composition and concentration which will support combustion, and being capable of being ignited and combusted through autoignition to produce a metal oxide powder, which process comprises providing at least one substantially soluble metal salt; combining said metal salt with a substantially soluble, combustible amino acid to form said precursor mixture, and evaporating said precursor mixture to form the substantially homogenous intermediate material.

13. The process of claim 12, which further includes the step of evaporating said precursor aqueous mixture to form an evaporated intermediate material.

14. The process of claim 12, wherein said evaporated intermediate material comprises a viscous liquid intermediate.

15. The process of claim 12, which further includes the step of igniting said intermediate material to form a metal oxide powder.

16. The process of claim 12, which further includes the step of volatizing said metal oxide powder to drive off substantially all of the remaining carbon and metal salt anion, respectively.

17. The process of claim 12, wherein said metal oxide powder has a particle size of not more than one micrometer.

18. The process of claim 12, wherein said metal oxide powder comprises a single crystalline phase.

19. The process of claim 12, wherein the primary particle diameter of the metal oxide powder is in the range of about 10 to 700 nm.

20. A substantially homogenous intermediate material as defined in claim 1, having a composition and concentration which will support combustion, and being capable of being ignited and combusted through autoignition to produce a metal oxide powder.

21. The mixture of claim 20, wherein said amino acid compound comprises glycine.

22. The mixture of claim 20, wherein the anion of said metal salt comprises a nitrate.

23. The mixture of claim 20, wherein the cation of said metal salt comprises any one of aluminium, calcium, chromium, manganese, iron, nickel, copper, strontium, yttrium, zirconium, silver, barium, lanthanum, cerium, cobalt, zinc, hafnium, molybdenum and bismuth, lithium, sodium, magnesium, potassium, scandium, rubidium, cadmium, indium, cesium, mercury, thallium, lead, praseodymium, neodymium, samarium, europium, gadolinium, terbium, dysprosium, holmium, erbium, thulium, ytterbium, lutetium, uranium and thorium, respectively.

24. The mixture of claim 20, wherein the anion of said metal salt comprises any one of acetates, formates, halides, oxyhalides, sulphates, carbonates and nitrates.

25. The mixture of claim 20, wherein said amino acid compound comprises any one of glycine, alanine, valine, leucine, isoleucine, proline, aspartic acid, glutamic acid, lysine, arginine, histidine, asparagine, glutamine, serine, threonine, phenylalanine, tyrosine, and tryptophan.

26. A process for producing a metal oxide powder which comprises
forming a substantially homogeneous, aqueous precursor mixture comprising at least one substantially soluble metal compound and a substantially water-soluble, combustible co-reactant amino-acid compound;
evaporating said precursor mixture to a total solids level which will support combustion; and
igniting said evaporated mixture and combusting same through autoignition to produce said single phase metal oxide powders.

27. The process of claim 1, wherein ammonium nitrate and additional combustible co-reactant compound are added to increase the ash bulk volume.

28. The process of claim 12, wherein said metal oxide powder comprises mixed crystalline phases.

## Patentansprüche

1. Verfahren zur Herstellung von Metalloxid-Pulvern durch
Bilden einer im wesentlichen homogenen, wässrigen Vormischung aus wenigstens einem im wesentlichen löslichen Metallsalz und einer im wesentlichen löslichen Aminosäureverbindung;
Eindampfen der Vormischung zur Erzeugung eines homogenen Zwischenproduktes mit einer die Verbrennung fördernden Zusammensetzung und Konzentration und
Anzünden des Zwischenproduktes und Ausbrennen derselben durch Selbstentzündung zur Erzeugung des Metalloxides.

2. Verfahren nach Anspruch 1, dadurch gekennzeichnet, daß die Aminosäure-Verbindung Glycin enthält.

3. Verfahren nach Anspruch 1, dadurch gekennzeichnet, daß das Anion des Metallsalzes eine Nitratverbindung enthält.

4. Verfahren nach Anspruch 1, dadurch gekennzeichnet, daß das Ausbrennen bei einer Temperatur durchgeführt wird, bei der im wesentlichen die gesamte Aminosäureverbindung verbraucht, aber weder das Metalloxid-Pulver nennenswert geschmolzen wird, noch ein Verlust derjenigen flüchtigen Metalloxidbestandteile eintritt, der zu einer erheblichen Beeinträchtigung der Stöchiometrie oder der Bildung nicht-korrekter kristalliner Phasen führen würde.

5. Verfahren nach Anspruch 1, dadurch gekennzeichnet, daß das Kation des Metallsalzes ausgewählt wird aus der Gruppe: Aluminium, Kalzium, Chrom, Mangan, Eisen, Nickel, Kupfer, Strontium, Yttrium, Zirkon, Silber, Barium, Lanthan, Wismut, Lithium, Natrium, Magnesium, Kalium, Scandium, Zink, Rubidium, Kadmium, Indium, Cäsium, Quecksilber, Thallium, Blei, Cer, Praseodym, Neodym, Samarium, Europium, Gadolinium, Terbium, Dysprosium, Holmium, Kobalt, Zink, Hafnium, Molybdän, Erbium, Thulium, Ytterbium, Lutetium, Uran bzw. Thorium.

6. Verfahren nach Anspruch 1, dadurch gekennzeichnet, daß das Metalloxid-Pulver ausgewählt wird aus der Gruppe: Lanthan-Strontium-Chromat, Yttrium-Kalzium-Chromat, Lanthan-Strontium-Manganat, Yttrium-Kalzium-Manganat, Cer-Zirkon, Aluminium-Zirkon, Lanthan-Strontium-Aluminium-Chromat, Yttrium-Barium-Kupfer-Oxid, Wismut-Kalzium-Strontium-Kupfer-Oxid, Nickel-Oxid/Nickel-Ferrit, Yttrium-stabilisiertes Zirkon, Kalzium-Zirkonat, Strontium-Zirkonat, Mangan-Ferrit und Lanthan-Strontium-Ferrit.

7. Verfahren nach Anspruch 1, dadurch gekennzeichnet, daß das Metallsalz ausgewählt wird aus der Gruppe: Lanthan-Nitrat-Hydrat, Strontium-Nitrat, Chrom-Nitrat-Hydrat, Yttrium-Nitrat-Hydrat, Kalzium-Nitrat-Hydrat, Barium-Nitrat, Kupfer-Nitrat-Hydrat, Wismut-Nitrat-Hydrat, Strontium-Nitrat, Nickel-Nitrat-Hydrat, Eisen-Nitrat-Hydrat, Zirkon-Nitrat-Pentahydrat, Yttrium-Nitrat-Hexahydrat, Mangan-Nitrat-Tetrahydrat, Eisen-Nitrat-Hexahydrat und Lanthan-Nitrat-Hexahydrat, Aluminium-Nitrat-Nonahydrat, Cer-Nitrat-Hexahydrat, Kobalt-Nitrat-Hydrat, Zink-Nitrat-Hydrat, Hafnium-Nitrat-Hydrat und Molybdän-Nitrat-Hydrat.

8. Verfahren nach Anspruch 1, dadurch gekennzeichnet, daß das Anion des Metallsalzes eine Acetat, Formiat-, Halogenid-, Oxihalogenid-, Sulfat-, Karbonat- oder Nitratverbindung enthält.

9. Verfahren nach Anspruch 1, dadurch gekennzeichnet, daß der primäre Partikeldurchmesser des Metalloxides im Bereich von etwa 10 bis 700 nm liegt.

10. Verfahren nach Anspruch 1, dadurch gekennzeichnet, daß die Aminosäureverbindung ausgewählt wird aus der Gruppe: Glyzin, Alanin, Valin, Leuzin, Isoleuzin, Prolin, Asparaginsäure, Glutaminsäure, Lysin, Arginin, Hystidin, Asparagin, Glutamin, Serin, Threonin, Phenylamin, Tyrosin oder Tryptophan.

11. Verfahren nach Anspruch 1, dadurch gekennzeichnet, daß der primäre Partikeldurchmesser des Metalloxides im Bereich von etwa 100 bis 300 nm liegt.

12. Verfahren zur Herstellung eines im wesentlichen homogenen Zwischenproduktes gemäß Anspruch 1, das eine das Ausbrennen unterstützende Zusammensetzung und Konzentration aufweist und entzündbar sowie durch Selbstentzündung ausbrennbar ist zur Erzeugung eines Metalloxid-Pulvers, dadurch gekennzeichnet, daß wenigstens ein im wesentlichen lösliches Metallsalz mit einer im wesentlichen löslichen, brennbaren Aminosäure zu der Vormischung zusammengeführt werden und die Vormischung zur Bildung des im wesentlichen homogenen Zwischenproduktes eingedampft wird.

13. Verfahren nach Anspruch 12, gekennzeichnet durch die weitere Verfahrensstufe des Eindampfens der wässrigen Vormischung zur Erzeugung eines eingeengten Zwischenproduktes.

14. Verfahren nach Anspruch 12, dadurch gekennzeichnet, daß das eingeengte Zwischenprodukt ein viskos-flüssiges Zwischenerzeugnis enthält.

15. Verfahren nach Anspruch 12, gekennzeichnet durch die weitere Verfahrensstufe des Anzündens des Zwischenproduktes zur Bildung eines Metalloxid-Pulvers.

16. Verfahren nach Anspruch 12, gekennzeichnet, durch die weitere Verfahrensstufe des Eindampfens und Entgasens des Metalloxid-Pulvers zum Austreiben aller restlichen Kohlenstoff- bzw. Metallsalz-Anionen.

17. Verfahren nach Anspruch 12, dadurch gekennzeichnet, daß das Metalloxid-Pulver eine Partikelgröße von nicht mehr als 1 µm hat.

18. Verfahren nach Anspruch 12, dadurch gekennzeichnet, daß das Metalloxid-Pulver eine einzige kristalline Phase aufweist.

19. Verfahren nach Anspruch 12, dadurch gekennzeichnet, daß der primäre Partikeldurchmesser des Metalloxid-Pulvers im Bereich von etwa 70 bis 700 nm liegt.

20. Ein im wesentlichen homogenes Zwischenprodukt gemäß Anspruch 1, dadurch gekennzeichnet, daß es eine das Ausbrennung unterstützende Zusammensetzung und Konzentration aufweist und entzündbar und durch Selbstentzündung zur Erzeugung eines Metalloxid-Pulvers ausbrennbar ist.

21. Mischung nach Anspruch 20, dadurch gekennzeichnet, daß die Aminosäureverbindung Glyzin enthält.

22. Mischung nach Anspruch 20, dadurch gekennzeichnet, daß das Anion des Metallsalzes ein Nitrat enthält.

23. Mischung nach Anspruch 20, dadurch gekennzeichnet, daß das Kation des Metallsalzes ausgewählt wird aus: Aluminium, Kalzium, Chrom, Mangan, Eisen, Nickel, Kupfer, Strontium, Yttrium, Zirkon, Silber, Barium, Lanthan, Cer, Kobalt, Zink, Hafnium, Molybdän und Wismut, Lithium, Natrium, Magnesium, Kalium, Scandium, Rubidium, Cadmium, Indium, Cäsium, Quecksilber, Thallium, Blei, Praseodym, Neodym, Samarium, Europium, Gadolinium, Terbium, Dysprosium, Holmium, Erbium, Thulium, Ytterbium, Lutetium, Uran, bzw. Thorium.

24. Mischung nach Anspruch 20, dadurch gekennzeichnet, daß das Anion des Metallsalzes ein Acetat, Formiat, Helogenid, Oxyhalogenid, Sulfat, Karbonat oder Nitrat enthält.

25. Mischung nach Anspruch 20, dadurch gekennzeichnet, daß die Aminosäureverbindung ausgewählt wird aus der Gruppe: Glyzin, Alanin, Valin, Leuzin, Isoleuzin, Prolin, Asparaginsäure, Glutaminsäure, Lysin, Arginin, Hystidin, Asparagin, Glutamin, Serin, Threonin, Phenylalanin, Tyrosin und Tryptophan.

26. Verfahren zur Herstellung eines Metalloxid-Pulvers durch
Bildung einer im wesentlichen homogenen, wässrigen Vormischung aus wenigstens einer im wesentlichen löslichen Metallverbindung und einer im wesentlichen wasserlöslichen, brennbaren co-reagierenden Aminosäure-Verbindung;
Abdampfen der Vormischung bis zu einem das Ausbrennen uncerstützenden Total-Feststoffniveau;
Anzünden der eingeengten Mischung und Ausbrennen derselben durch Selbstentzündung zur Erzeugung des einphasigen Metalloxid-Pulvers.

27. Verfahren nach Anspruch 1, dadurch gekennzeichnet, daß Ammoniumnitrat und zusätzlich eine brennbare, co-reagierende Verbindung zugegeben wird, um das Ascheschüttvolumen zu erhöhen.

28. Verfahren nach Anspruch 12, dadurch gekennzeichnet, daß das Metalloxid-Pulver gemischte Kristallphasen enthält.

## Revendications

1. Procédé pour fabriquer une poudre d'oxyde de métal qui consiste en :
- la formation d'un mélange précurseur aqueux, sensiblement homogène, comprenant au moins un sel de métal sensiblement soluble et un composé d'acide aminé combustible, sensiblement soluble,
- l'évaporation du dit mélange précurseur pour former un matériau intermédiaire sensiblement homogène ayant une composition et une concentration qui supporteront la combustion ; et,
- l'inflammation du dit matériau intermédiaire et la combustion de ce dernier par auto-inflammation pour produire ladite poudre d'oxyde de métal.

2. Procédé selon la revendication 1, dans lequel ledit composé d'acide aminé comprend de la glycine.

3. Procédé selon la revendication 1, dans lequel l'anion du dit sel de métal comprend un composé de nitrate.

4. Procédé selon la revendication 1, dans lequel ladite étape de combustion est menée à une température qui va consommer sensiblement tout ledit composé d'acide aminé, mais qui ne fera pas fondre sensiblement ladite poudre de métal d'oxyde et qui ne provoquera pas non plus la perte, des dits composants d'oxyde de métal volatils causant une perte sensible de stoechiométrie ou causant la formation de phases cristallines incorrectes.

5. Procédé selon la revendication 1, dans lequel le cation du dit sel de métal comprend un quelconque des éléments suivants : aluminium, calcium, chrome, manganèse, fer, nickel, cuivre, strontium, yttrium, zirconium, argent, baryum, lanthane, bismuth, lithium, sodium, magnésium, potassium, scandium, zinc, rubidium, cadmium, indium, césium, mercure, thallium, plomb, cérium, praséodyme, néodyme, samarium, europium, gadolinium, terbium, dysprosium, holmium, cobalt, hafnium, molybdène, erbium, thulium, ytterbium, lutécium, uranium et thorium.

6. Procédé selon la revendication 1, dans lequel ladite poudre d'oxyde de métal comprend un quelconque des éléments suivants : chromite de strontium lanthane, chromite de calcium yttrium, manganite de strontium lanthane, manganite de calcium yttrium, oxyde cériquezircone, alumine-zircone, chromite d'aluminium strontium lanthane, oxyde de cuivre baryum yttrium, oxyde de cuivre strontium calcium bismuth, ferrite de nickel-oxyde de nickel, zircone d'oxyde d'yttrium stabilisé, zirconate de calcium, zirconate de strontium, ferrite de manganèse, et ferrite de strontium lanthane.

7. Procédé selon la revendication 1, dans lequel ledit sel de métal comprend un quelconque des éléments suivants : hydrate de nitrate de lanthane, nitrate de strontium, hydrate de nitrate de chrome, hydrate de nitrate d'yttrium, hydrate de nitrate de calcium, nitrate de baryum, hydrate de nitrate de cuivre, hydrate de nitrate de bismuth, hydrate de nitrate de nickel, hydrate de nitrate de fer, pentahydrate de nitrate de zirconium, hexahydrate de nitrate d'yttrium, tétrahydrate de nitrate de manganèse, hexahydrate de nitrate de fer, et hexahydrate de nitrate de lanthane, nonahydrate de nitrate d'aluminium, hexahydrate de nitrate de cérium, hydrate de nitrate de cobalt, hydrate de nitrate de zinc, hydrate de nitrate d'hafnium, et hydrate de nitrate de molybdène.

8. Procédé selon la revendication 1, dans lequel l'anion du dit sel de métal comprend un quelconque des éléments suivants : composé d'acétate, de formiate, d'halogénure, d'oxyhalogénure, de sulfate, de carbonate et de nitrate.

9. Procédé selon la revendication 1, dans lequel le diamètre de particule primaire de la poudre d'oxyde de métal est dans la plage de 10 à 700 nm environ.

10. Procédé selon la revendication 1, dans lequel ledit composé d'acide aminé comprend un quelconque des éléments suivants : glycine, alanine, valine, leucine, isoleucine, proline, acide aspartique, acide glutamique, lysine, arginine, histidine, asparagine, glutamine, sérine, thréonine, phénylalanine, tyrosine, et tryptophane.

11. Procédé selon la revendication 1, dans lequel le diamètre de particule primaire de la poudre d'oxyde de métal est dans la plage de 100 à 300 nm environ.

12. Procédé pour fabriquer un matériau intermédiaire sensiblement homogène selon la revendication 1, ledit matériau ayant une composition et une concentration qui supporteront la combustion, et étant capable d'être enflammé et brûlé par auto-inflammation pour produire une poudre d'oxyde de métal, lequel procédé comprend les étapes suivantes : fourniture d'au moins un sel de métal sensiblement soluble ; combinaison du dit sel de métal avec un acide aminé combustible sensiblement soluble pour former ledit mélange précurseur, et évaporation du dit mélange précurseur pour former le matériau intermédiaire sensiblement homogène.

13. Procédé selon la revendication 12, qui comprend, de plus, l'étape d'évaporation du dit mélange aqueux précurseur pour former un matériau intermédiaire évaporé.

14. Procédé selon la revendication 12, dans lequel ledit matériau intermédiaire évaporé est constitué d'un liquide visqueux intermédiaire.

15. Procédé selon la revendication 12, qui comprend, de plus, l'étape d'inflammation du dit matériau intermédiaire pour former une poudre d'oxyde de métal.

16. Procédé selon la revendication 12, qui comprend, de plus, l'étape de volatilisation de ladite poudre d'oxyde de métal pour évacuer respectivement, sensiblement tout le carbone restant et l'anion de sel de métal.

17. Procédé selon la revendication 12, dans lequel ladite poudre d'oxyde de métal a une taille de particule inférieure ou égale à un micromètre.

18. Procédé selon la revendication 12, dans lequel ladite poudre d'oxyde de métal est constituée d'une phase monocristalline.

19. Procédé selon la revendication 12, dans lequel le diamètre de particule primaire de la poudre d'oxyde de métal est dans la plage de 10 à 700 nm environ.

20. Matériau intermédiaire sensiblement homogène tel que défini dans la revendication 1, ayant une composition et une concentration qui supporteront la combustion, et qui est capable d'être enflammé et brûlé par auto-inflammation pour produire une poudre d'oxyde de métal.

21. Mélange selon la revendication 20, dans lequel ledit composé d'acide aminé comprend de la glycine.

22. Mélange selon la revendication 20, dans lequel l'anion du dit sel de métal comprend un nitrate.

23. Mélange selon la revendication 20, dans lequel le cation du dit sel de métal comprend un quelconque des éléments suivants : aluminium, calcium, chrome, manganèse, fer, nickel, cuivre, strontium, yttrium, zirconium, argent, baryum, lanthane, cérium, cobalt, zinc, hafnium, molybdène et bismuth, lithium, sodium, magnésium, potassium, scandium, rubidium, cadmium, indium, césium, mercure, thallium, plomb, cérium, praséodyme, néodyme, samarium, europium, gadolinium, terbium, dysprosium, holmium, erbium, thulium, ytterbium, lutécium, uranium et thorium.

24. Mélange selon la revendication 20, dans lequel l'anion du dit sel de métal comprend un quelconque des éléments suivants : acétates, formiates, halogénures, oxyhalogénures, sulfates, carbonates et nitrates.

25. Mélange selon la revendication 20, dans lequel ledit composé d'acide aminé comprend un quelconque des éléments suivants : glycine, alanine, valine, leucine, isoleucine, proline, acide aspartique, acide glutamique, lysine, arginine, histidine, asparagine, glutamine, sérine, thréonine, phénylalanine, tyrosine, et tryptophane.

26. Procédé pour fabriquer une poudre d'oxyde de métal qui comprend les étapes suivantes :
- formation d'un mélange précurseur aqueux sensiblement homogène, comprenant au moins un composé de métal sensiblement soluble et un composé d'acide aminé combustible, co-réactant, sensiblement soluble dans l'eau,
- évaporation du dit mélange précurseur jusqu'à un niveau total de matières solides qui supportera la combustion, et
- inflammation du dit mélange évaporé et combustion de ce dernier par auto-inflammation pour produire les dites poudres d'oxyde de métal à une seule phase.

27. Procédé selon la revendication 1, dans lequel du nitrate d'ammonium et un composé co-réactant combustible additionnel sont ajoutés pour augmenter le volume d'encombrement des cendres.

28. Procédé selon la revendication 12, dans lequel ladite poudre d'oxyde de métal est constituée de phases cristallines mélangées.
